(19) Europäisches Patentamt
European Patent Office
Office européen des brevets

(11) Veröffentlichungsnummer : **0 537 223 B1**

(12) # EUROPÄISCHE PATENTSCHRIFT

(45) Veröffentlichungstag der Patentschrift :
**17.08.94 Patentblatt 94/33**

(51) Int. Cl.$^5$ : **C07F 9/6571,** C08K 5/5377

(21) Anmeldenummer : **91911955.2**

(22) Anmeldetag : **22.06.91**

(86) Internationale Anmeldenummer :
**PCT/EP91/01158**

(87) Internationale Veröffentlichungsnummer :
**WO 92/00306 09.01.92 Gazette 92/02**

(54) **NEUE 6-ARYL-6H-DIBENZO-[c,e][1,2]-OXAPHOSPHORINE, EIN VERFAHREN ZU IHRER HERSTELLUNG UND DEREN VERWENDUNG ZUR STABILISIERUNG VON KUNSTSTOFFEN, INSBESONDERE POLYOLEFINFORMMASSEN.**

(30) Priorität : **02.07.90 DE 4021195**
**03.06.91 DE 4118147**

(43) Veröffentlichungstag der Anmeldung :
**21.04.93 Patentblatt 93/16**

(45) Bekanntmachung des Hinweises auf die Patenterteilung :
**17.08.94 Patentblatt 94/33**

(84) Benannte Vertragsstaaten :
**AT BE CH DE ES FR GB IT LI NL**

(56) Entgegenhaltungen :
**EP-A- 0 304 782**
**US-A- 4 185 006**

(56) Entgegenhaltungen :
**PATENT ABSTRACTS OF JAPAN, vol. 11, no. 132 C-417(2579), 24 April 1987, & JP-A-61 266 614 (NIPPON ESTER CO., LTD) 26 Nov. 1986 & CHEMICAL ABSTRACTS SERVICE, REGISTRY HANDBOOK, 1987 Supplement, American Chemical Society, seite 2354RP, Zusammenfassung Nr. 108890-47-7; "1,4-Benzenediol, 2-(6H-dibenz (c,e)(1,2)oxaphosphorin-6-yl) C18H1303P"**

(73) Patentinhaber : **HOECHST AKTIENGESELLSCHAFT**
**D-65926 Frankfurt (DE)**

(72) Erfinder : **BÖHSHAR, Manfred**
**Im Förstergrund 14**
**D-6233 Kelkheim (DE)**
Erfinder : **KLEINER, Hans-Jerg**
**Altkönigstra e 11a**
**D-6242 Kronberg (DE)**
Erfinder : **PFAHLER, Gerhard**
**Karlsbader Stra e 27**
**D-8900 Augsburg (DE)**

EP 0 537 223 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Neue 6-Aryl-6H-dibenzo-[c,e][1,2]-oxaphosphorine, ein Verfahren zu ihrer Herstellung und deren Verwendung zur Stabilisierung von Kunststoffen, insbesondere Polyolefinformmassen

Die vorliegende Erfindung betrifft neue 6-Aryl-6H-dibenzo-[c,e][1,2]-oxaphosphorine, ein Verfahren zu ihrer Herstellung sowie deren Verwendung zur Stabilisierung von Kunststoffen, insbesondere von Polyolefinen.

Es ist bekannt, daß synthetische Polymere gegen unerwünschte oxydative, thermische und Photochemische Schädigung während der Herstellung, der Verarbeitung und des Gebrauchs durch Stabilisatoren oder Stabilisatorsysteme geschützt werden müssen. Solche Stabilisatoren bestehen beispielsweise aus einem phenolischen Antioxydans, das insbesondere die Langzeit-Gebrauchsstabilität des Fertigteils gewährleisten soll und einem oder mehreren Costabilisatoren, die die Verarbeitungsstabilität regeln und teilweise auch die Wirkung der phenolischen Komponente synergistisch verstärken.

Zu den gebräuchlichen Costabilisatoren gehören beispielsweise ortho-alkylierte Arylphosphite und Phosphonite.

Die in der EP-PS 5 447 beschriebenen Phosphonigsäurediarylester weisen zwar für bestimmte Anwendungsbereiche ausreichende Eigenschaften als Stabilisatoren auf; deren Synthese geht jedoch von Organodichlorphosphanen aus, die technisch schwer zugänglich sind. In der Praxis steht als einziges technisch verfügbares Vorprodukt Phenyldichlorphosphan zur Verfügung, durch das ausschließlich Derivate der benzolphosphonigen Säure zugänglich werden. Zur Erzielung der angestrebten Eigenschaften ist es jedoch vielfach wünschenswert, gerade Verbindungen mit höher substituierten Arylgruppen am Phosphor zur Verfügung zu haben.

Ein weiterer schwerwiegender Nachteil besteht in der Notwendigkeit, bei der Synthese freigesetzten Chlorwasserstoff durch eine geeignete Hilfsbase zu neutralisieren. Bei deren Recyclisierung ist der zwangsläufige Anfall von zwei Äquivalenten des entsprechenden Salzes unvermeidlich.

Die in der DE-OS 2 034 887 durch Hydrolyse, Veresterung, Umesterung, Alkylierung oder Sulfurierung von 6-Chlordibenzo-[c,e][1,2]-oxaphosphorin hergestellten phosphonigsäureester weisen u.a. Nachteile hinsichtlich Lagerstabilität, Farbverhalten und Hydrolysebeständigkeit auf, wie es bereits in der US-PS 4 185 006 beschrieben worden ist.

Aufgabe der vorliegenden Erfindung war es daher, neue phosphorstabilisatoren zur Verfügung zu stellen, die einerseits die hohen Anforderungen der Praxis erfüllen und insbesondere auch bei der Einwirkung von Wasser nicht in mehrere Bruchstücke und/oder saure Folgeprodukte zerfallen, gleichzeitig aber in einfacher Weise und in hoher Ausbeute durch ökologisch günstige Verfahren herstellbar sind.

Es wurde nun überraschend gefunden, daß cyclische phosphinigsäureester der Formel I (siehe Patentanspruch 1) diesen Erfordernissen in hohem Maße gerecht werden.

Gegenstand der Erfindung sind daher Dibenzo-[c,e][1,2]-oxaphosphorine der Formel I, das sind Aryl-6H-dibenzo-[c,e][1,2]-oxaphosphorine mit n = 1 sowie Aryl-bis-{6H-dibenzo-[c,e][1,2]-oxaphosphorine} mit n = 2, in denen $R^1$ als einwertiger Rest einen Phenylrest, der 1 bis 3 Substituenten tragen kann oder einen Naphthylrest, der 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen und als zweiwertiger Rest einen Phenylen- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt.

Im einzelnen seien für $R^1$ als einwertigen Rest z.B. die verschiedenen Tolylreste, Xylylreste, Mesityl, 2,4,5-Trimethylphenyl, die verschiedenen tert.-Butylphenylreste, Di-tert.-butylphenylreste, 2,4,6-Tri-tert.-butylphenyl, 2,4-Di-tert.-octylphenyl, die verschiedenen Biphenyl-, Methylnaphthyl-, Dimethylnaphthyl- sowie Trimethylnaphthylreste genannt.

Für $R^1$ als zweiwertigen Rest seien beispielsweise genannt die verschiedenen Phenylenreste, wie 1,3- und 1,4-Phenylen, die verschiedenen Biphenylenreste, wie 2′,3-, 2′,4-, 3′,3-, 3′,4- und 4,4′-Biphenylen und die verschiedenen Naphthylenreste, wie 1,4- und 1,6-Naphthylen.

Gegenstand der Erfindung ist auch ein Verfahren zur Herstellung der Phosphinigsäureester der Formel I, worin $R^1$ die oben angegebene Bedeutung hat, das dadurch gekennzeichnet ist, daß man zunächst in erster Stufe ein Kohlenwasserstoffhalogenid $R^1$-$(Hal)_n$, worin $R^1$ die vorgenannte Bedeutung hat, n = 1 oder 2 ist und dessen Halogen ein Atomgewicht von mindestens 35 hat, bevorzugt jedoch Chlor oder Brom ist, unter Grignard-Bedingungen, also zweckmäßig unter inniger Durchmischung, mit einer mindestens stöchiometrischen Menge feinteiligem Magnesium zu den entsprechenden Grignard-Verbindungen $R^1(MgHal)_n$ umsetzt und diese weiter

in einer zweiten Stufe mit 6-Chlor-6H-dibenzo-[c,e][1,2]-oxaphosphorin umsetzt.

Die erste Stufe des erfindungsgemäßen Verfahrens, die man an sich in jeder üblichen Weise durchführen kann, wird bevorzugt in einem aprotischen, organischen Lösungsmittel wie einem Äther, z.B. Diäthyl-, Dipropyl- oder Diisopropyläther, Äthylenglykoldimethyl- oder -äthyläther, Diäthylenglykoldimethyl- oder -äthyläther, Methyl-tert.-butyläther, Dioxan oder Tetrahydrofuran durchgeführt.

Da die Grignard-Verbindungen hydrolyse- und oxydationsempfindlich sind, kann es zweckmäßig sein, unter Schutzgasatmosphäre zu arbeiten. Ein solches Vorgehen ist jedoch für das Gelingen der Reaktion keineswegs zwingend. Als Schutzgas besonders geeignet sind Stickstoff und Argon. Die Reaktionstemperatur liegt im allgemeinen zwischen 20 und 125°C, bevorzugt jedoch zwischen 30 und 70°C. Die Einwirkung von Ultraschall während der Grignardierung ist zuweilen von Vorteil.

Zur Herstellung der Verbindungen I wird in der zweiten Stufe die Lösung bzw. Suspension des Grignard-Reagenzes mit einer Lösung von 6-Chlor-6H-dibenzo-[c,e][1,2]-oxaphosphorin umsetzt. Dies kann beispielsweise in der Weise geschehen, daß man die Lösung bzw. Suspension des Grignard-Reagenzes zu einer Lösung von 6-Chlor-6H-dibenzo-[c,e][1,2]-oxaphosphorin unter lebhafter Durchmischung zudosiert. Es ist aber auch die umgekehrte Zudosierung möglich. Als Verdünnungsmittel kommen inerte, aprotische Lösungsmittel, z.B. eine aliphatische Kohlenwasserstofffraktion, Hexan, Heptan, Cyclohexan, Toluol, Xylol oder einer der obengenannten Äther bzw. entsprechende Gemische in Frage. Die Reaktionstemperatur liegt bei diesem Schritt im allgemeinen zwischen -30 und +50°C, vorzugsweise aber zwischen -20 und +20°C. Die Umsetzung verläuft in der Regel exotherm; dementsprechend kann es zweckmäßig sein, den Reaktionsverlauf durch Kühlung zu steuern. Die günstigsten Ergebnisse werden erzielt, wenn man die Reaktionspartner in den stöchiometrischen Mengen einsetzt. Es ist jedoch auch möglich, einen Reaktionspartner im Überschuß einzusetzen; im allgemeinen sind damit aber keine besonderen Vorteile verbunden. Zweckmäßig wird gerührt, bis die Umsetzung vollständig ist, und anschließend vom ausgefallenen Magnesiumhalogenid abgetrennt. Die Lösungsmittel können aus dem Filtrat in üblicher Weise, vorteilhaft destillativ, insbesondere unter vermindertem Druck, entfernt werden.

Die Produkte I lassen sich nach beliebigen Verfahren, bevorzugt jedoch durch Kristallisation, aus den Rohprodukten aussondern.

Bei der Synthese von Phosphinigsäureestern durch Umsetzung von Phosphorigsäure-ester-halogeniden mit Organomagnesiumhalogeniden läuft als ausbeutevermindernde Nebenreaktion der Austausch des OR-Restes durch die Grignard-Verbindung ab, so daß selbst in den günstigsten Fällen die erzielten Ausbeuten 60 % nicht übersteigen (Houben-Weyl: "Methoden der organischen Chemie", 12/1, S. 210 (1963)).

Darüberhinaus bestand in der Literatur ein Vorurteil dahingehend, daß die Umsetzung von Phosphonigsäure-halogeniden mit Organomagnesiumbromiden zunächst immer zu unlöslichen Komplexverbindungen führt, die erst durch Zugabe weiterer Hilfsstoffe (z.B. 4 Mol Pyridin) zerlegt werden müssen, um eine Isolierung der gewünschten Phosphinigsäureester zu ermöglichen (Houben-Weyl, l.c.). Daher ist es besonders überraschend, daß das Verfahren der vorliegenden Erfindung die Phosphinigsäureester I in hoher Ausbeute und Reinheit zugänglich macht, ohne daß der Einsatz von Dekomplexierungsmitteln notwendig ist.

Das als Vorprodukt benötigte 6-Chlor-6H-dibenzo-[c,e][1,2]-oxaphosphorin ist in einfacher Weise nach dem Verfahren der DE-OS 2 034 887 ohne Verwendung eines Lösungsmittels oder einer Hilfsbase aus Phosphortrichlorid und o-Phenylphenol zugänglich.

Gegenstand der Erfindung ist schließlich die Verwendung der Verbindungen der Formel V für sich oder in Kombination mit einem phenolischen Antioxydans zur Stabilisierung von Kunststoffen, wie Polycarbonaten, vorzugsweise Polymerisationskunststoffen wie Polyolefinen, insbesondere Polypropylen. Die Verbindungen der Formel I verleihen den Kunststoffen in den Formmassen eine verbesserte Stabilität gegen Abbau durch Licht, Sauerstoff und Wärme. Für diese Anwendung ist vielfach jedoch die Reinheit des anfallenden rohen Reaktionsprodukts (85 - 93 % lt. $^{31}P$-NMR) ausreichend. Eine Isolierung in reiner Form ist dann nicht erforderlich.

Die vorliegende Erfindung betrifft somit auch eine Kunststoff-Formmasse, enthaltend einen thermoplastischen oder duroplastischen Kunststoff und ein 6-Aryl-6H-dibenzo-[c,e][1,2]-oxaphosphorin der Formel I im Verhältnis von (90 bis 99,99) : (0,01 bis 10), worin n = 1 oder 2, worin $R^1$ als einwertiger Rest einen Phenylrest, der 1 bis 3 Substituenten tragen kann oder einen Naphthylrest, der 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen und als zweiwertiger Rest einen Phenylen- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt.

Die erfindungsgemäße Kunststoff-Formmasse enthält ein thermoplastisches oder duroplastisches organisches Polymer, beispielsweise eines der nachstehend aufgeführten:

1. Polymere von Mono- und Diolefinen, beispielsweise Polyäthylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen wie Cyclopenten oder Norbornen.

2. Mischungen der unter 1) genannten Polymeren, z.B. von Polypropylen mit Polyäthylen oder mit Polyisobutylen.

3. Copolymere von Mono- und Diolefinen untereinander oder mit anderen Vinylmonomeren, wie Äthylen-Propylen-Copolymere, Propylen-Buten-1-Copolymere, Propylen-Isobutylen-Copolymere, Äthylen-Buten-1-Copolymere, Propylen-Butadien-Copolymere, Isobutylen-Isopren-Copolymere, Athylen-Alkylacrylat-Copolymere, Äthylen-Alkylmethacrylat-Copolymere, Äthylen-Vinylacetat-Copolymere oder Athylen-Acrylsäure-Copolymere und deren Salze (Ionomere), sowie Terpolymere von Äthylen mit Propylen und einem Dien, wie Hexadien, Dicyclopentadien oder Äthylidennorbornen.

4. Polystyrol.

5. Copolymere von Styrol oder $\alpha$-Methylstyrol mit Dienen oder Acrylderivaten, wie Styrol-Butadien, Styrol-Maleinsäureanhydrid, Styrol-Acrylnitril, Styrol-Äthylmethacrylat, Styrol-Butadien-Äthylacrylat, Styrol-Acrylnitril-Methylacrylat;
Mischungen von hoher Schlagzähigkeit aus Styrol-Copolymeren und einem anderen Polymeren wie einem Polyacrylat, einem Dien-Polymeren oder einem Äthylen-Propylen-Dien-Terpolymeren; sowie Block-Copolymere des Styrols, wie Styrol-Butadien-Styrol, Styrol-Isopren-Styrol, Styrol-Äthylen/Butylen-Styrol oder Styrol-Äthylen/Propylen-Styrol.

6. Pfropfcopolymere von Styrol, wie Styrol auf Polybutadien, Styrol und Acrylnitril auf Polybutadien (ABS), Styrol und Maleinsäureanhydrid auf Polybutadien, Styrol und Alkylacrylate bzw. Alkylmethacrylate auf Polybutadien, Styrol und Acrylnitril auf Äthylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, die z.B. als sogenannte ABS-, MBS-, ASA- oder AES-Polymere bekannt sind.

7. Halogenhaltige Polymere, wie Polychloropren, Chlorkautschuk, chloriertes (CPE) oder chlorsulfoniertes Polyäthylen, Epichlorhydrin-homo- und -copolymere, insbesondere Polymere aus halogenhaltigen Vinylverbindungen, wie Polyvinylchlorid (PVC), Polyvinylidenchlorid (PVDC), Polyvinylfluorid, Polyvinylidenfluorid (PVDF); sowie deren Copolymere wie Vinylchlorid-Vinylidenchlorid, Vinylchlorid-Vinylacetat oder Vinylidenchlorid-Vinylacetat.

8. Polymere, die sich von $\alpha,\beta$-ungesättigten Carbonsäuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie Acrylnitril-Butadien-Copolymere, Acrylnitril-Alkylacrylat-Copolymere, Acrylnitril-Alkoxyacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

11. Homo- und Copolymere von cyclischen Äthern, wie Polyäthylenglykole, Polyäthylenoxyd, Polypropylenoxyd oder deren Copolymere mit Bisglycidyläthern.

12. Polyacetale, wie Polyoxymethylen (POM), sowie solche Polyoxymethylene, die Comonomere wie Äthylenoxyd enthalten.

13. Polyphenylenoxyde und -sulfide.

14. Polyurethane (PUR), die sich von Polyäthern, Polyestern und Polybutadienen mit endständigen Hydroxylgruppen einerseits und aliphatischen oder aromatischen Polyisocyanaten andererseits ableiten sowie deren Vorprodukte (Polyisocyanate-Polyole-Präpolymere).

15. Polyamide und Copolyamide, die sich von Diaminen und Dicarbonsäuren und/oder von Aminocarbonsäuren oder den entsprechenden Lactamen ableiten, wie Polyamid-4, Polyamid-6,Polyamid-6/6, Polyamid-6/10, Polyamid-11, Polyamid-12, Poly-2,4,4-trimethylhexamethylenterephthalamid, Poly-m-phenylen-isophthalamid, sowie deren Copolymere mit Polyäthern wie mit Polyäthylenglykol, Polypropylenglykol oder Polytetramethylenglykol.

16. Polyharnstoffe, Polyimide und Polyamid-imide.

17. Polyester, die sich von Dicarbonsäuren und Diolen und/oder von Hydroxycarbonsäuren oder den entsprechenden Lactonen ableiten, wie Polyäthylenterephthalat, Polybutylenterephthalat (PBTP), Poly-1,4-dimethylolcyclohexan-terephthalat, Poly-(2,2-bis(4-hydroxyphenyl)-propan-)terephthalat, Polyhydroxybenzoate, sowie Block-Polyätherester, die sich von Polyäthylen mit Hydroxyendgruppen, Dialkoholen und Dicarbonsäuren ableiten.

18. Polycarbonate (PC).

19. Polysulfone und Polyäthersulfone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel, ableiten, wie auch deren halogenhaltige, schwerbrennbare Modifikationen.

23. Vernetzbare Acrylharze, die sich von substituierten Acrylsäureestern ableiten wie von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidyläthern oder von cycloaliphatischen Diepoxiden.

26. Natürliche Polymere, wie Cellulose, Naturkautschuk, Gelatine sowie deren polymerhomolog chemisch abgewandelte Derivate, wie Celluloseacetate, -propionate und -butyrate, bzw. die Celluloseäther, wie Methylcellulose.

27. Mischungen der oben erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, PC/PBT, PVC/CPE, PVD/Acrylat, POM/thermoplastisches PUR, POM/Acrylat, POM/MBS, Polyphenylenäther/hochschlagfestes (High Impact Strength) Polystyrol (PPE/HIPS), PPE/Polyamid-6.6- und Copolymere, PA/HDPE, PA/PP, PA/PPE.

28. Natürlich vorkommende und synthetische organische Stoffe, welche reine Monomere oder Mischungen von Monomeren sind, wie Mineralöle, tierische und pflanzliche Fette, Öle und Wachse, oder Öle, Fette und Wachse auf Basis synthetischer Ester oder Mischungen dieser Stoffe.

29. Wäßrige Dispersionen von Natur- oder Synthesekautschuk.

Das Polymere ist vorzugsweise ein Polyolefin, insbesondere Polypropylen. Der Anteil des Polymeren an der erfindungsgemäßen Formmasse beträgt 90 bis 99,99, vorzugsweise 98 bis 99,98 Gew.-%.

Als Stabilisator enthält die Formmasse ein Oxaphosphorin der Formel I und gegebenenfalls ein phenolisches Antioxidans.

Das phenolische Antioxidans ist z.B. ein Ester der 3,3-Bis-(3'-t-butyl-4'-hydroxyphenyl)-butansäure der Formel II

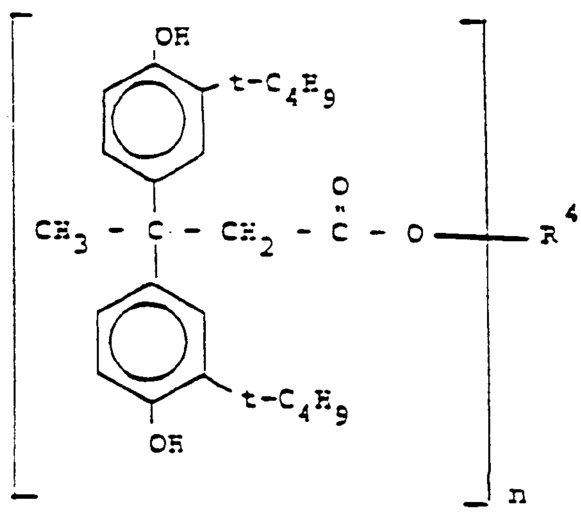

worin n 1 oder 2 ist und $R^4$ einen $C_1$-$C_{18}$-Alkylrest bedeutet, wenn n 1 ist, und einen $C_1$-$C_{12}$-Alkylenrest, wenn n 2 ist. Vorzugsweise ist $R^4$ ein $C_2$-$C_4$-Alkylenrest, insbesondere ein $C_2$-Alkylenrest.

Das phenolische Antioxidans kann jedoch auch ein Ester der β-(3,5-Di-t-butyl-4-hydroxy-phenyl)-propionsäure der Formel III sein,

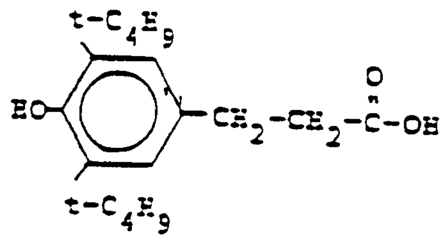 (III)

wobei die Alkoholkomponente ein ein- bis vierwertiger Alkohol, wie Methanol, Octadecanol, 1,6-Hexandiol, Neopentylglykol, Diäthylenglykol, Triäthylenglykol, Pentaerythrit, Tris-hydroxyäthyl-isocyanurat, Thiodiäthylenglykol oder Di-hydroxyäthyl-oxalsäurediamid ist.

Die neuen Stabilisatoren werden nach allgemein üblichen Methoden in die organischen Polymeren eingearbeitet. Die Einarbeitung kann beispielsweise durch Zugabe der Stabilisatoren vor oder während der Polymerisation, Polykondensation oder Polyaddition oder durch Einmischen der Verbindungen und gegebenenfalls weiterer Additive in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die den Polymeren zuzusetzende Menge liegt bei 0,01 bis 10, vorzugsweise 0,025 bis 5, insbesondere 0,05 bis 1,0 Gew.-%, bezogen auf das zu stabilisierende Material.

Die neuen Verbindungen können auch in Form eines Masterbatches, der diese Verbindungen beispielsweise in einer Konzentration von 1 bis 50, vorzugsweise 2,5 bis 20 Gew.-% enthält, den zu stabilisierenden Polymeren zugesetzt werden.

Zusätzlich kann die erfindungsgemäße Formmasse noch andere Antioxidantien enthalten, wie

1. **Alkylierte Monophenole**, z.B. 2,6-Di-t-butyl-4-methylphenol, -4-äthylphenol, -4-n-butylphenol, -4-i-butylphenol, 2-t-Butyl-4,6-dimethylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-t-butyl-4-methoxymethylphenol;

2. **Alkylierte Hydrochinone**, wie 2,5-Di-t-butyl- und 2,5-Di-t-amyl-hydrochinon, 2,6-Di-t-butyl-4-methoxyphenol und 2,6-Diphenyl-4-octadecyloxyphenol;

3. **Hydroxylierte Thiodiphenyläther**, wie 2,2′-Thio-bis-(6-t-butyl-4-methylphenol) und -(4-octylphenol) sowie 4,4′-Thio-bis-(6-t-butyl-3-methylphenol) und -(6-t-butyl-2-methylphenol);

4. **Alkyliden-Bisphenole**, wie 2,2′-Methylen-bis-(6-t-butyl-4-methylphenol), -(6-t-butyl-4-äthylphenol), -[4-methyl-6-(α-methylcyclohexyl)-phenol], -(4-methyl-6-cyclohexylphenol), -(6-nonyl-4-methylphenol), -(4,6-di-t-butylphenol), -[6-(α-methylbenzyl)-4-nonylphenol], -[6-(α,α-dimethylbenzyl)-4-nonylphenol], 4,4′-Methylen-bis-(2,6-di-t-butylphenol) und -(6-t-butyl-2-methylphenol), 2,2′-Äthyliden-bis-(4,6-di-t-butylphenol) und -(6-t-butyl-4-isobutylphenol), 1,1-Bis-und 1,1,3-Tris-(5-t-butyl-4-hydroxy-2-methylphenyl)-butan, 2,6-Di-(3-t-butyl-5-methyl-2-hydroxybenzyl)-4-methylphenol, 1,1-Bis-(5-t-butyl-4-hydroxy-2-methylphenyl)-3-n-dodecylmercaptobutan, Di-(3-t-butyl-4-hydroxy-5-methylphenyl)-dicyclo-pentadien;

5. **Benzylverbindungen**, wie Di-[2-(3′-t-butyl-2′-hydroxy-5′-methyl-benzyl)-6-t-butyl-4-methyl-phenyl]-terephthalat, 1,3,5-Tri-(3,5-di-t-butyl-4-hydroxybenzyl)-2,4,6-tri-methylbenzol, Di-(3,5-di-t-butyl-4-hydroxybenzyl)-sulfid, 3,5-Di-t-butyl-4-hydroxybenzyl-mercaptoessigsäure-isooctylester, Bis-(4-t-butyl-3-hydroxy-2,6-dimethylbenzyl)-dithiol-terephthalat, 1,3,5-Tris-(3,5-di-t-butyl-4-hydroxybenzyl)-isocyanurat, 1,3,5-Tris-(4-t-butyl-3-hydroxy-2,6- dimethylbenzyl)-isocyanurat, 3,5-Di-t-butyl-4-hydroxybenzyl-phosphonsäure-diocta-decylester und das Calciumsalz des 3,5-Di-t-butyl-4-hydroxybenzylphosphonsäure-mono-äthylesters;

6. **Acylaminophenole**, wie 4-Hydroxy-laurin- und -stearinsäureanilid, 2,4-Bis-octylmercapto-6-(3,5-di-t-butyl-4-hydroxy-anilino)-s-triazin und N-(3,5-di-t-butyl-4-hydroxyphenyl)carbaminsäure-octylester;

7. **Ester der β-(5-t-butyl-4-hydroxy-3-methylphenyl)-propionsäure** mit ein- oder mehrwertigen Alkoholen, wie mit Methanol, Octadecanol, 1,6-Hexandiol, Neopentylglykol, Diäthylenglykol, Triäthylenglykol, Pentaerythrit, Tris-hydroxyäthyl-isocyanurat, Thiodiäthylenglykol oder Di-hydroxyäthyloxalsäurediamid;

8. **Amide der β-(3,5-Di-t-butyl-4-hydroxyphenyl)-propionsäure**, wie N,N′-Di-(3,5-di-t-butyl-4-hydroxyphenylpropionyl)-trimethylendiamin, -hexamethylendiamin und -hydrazin.

Daneben kann die erfindungsgemäße Formmasse noch weitere Additive enthalten, wie

1. UV-Absorber und Lichtschutzmittel, z.B.

1.1 **2-(2′-Hydroxymethyl)-benztriazole**, wie das 5′-Methyl-, 3′,5′-Di-t-butyl-, 5′-t-Butyl-, 5′-(1,1,3,3-Tetramethylbutyl)-, 5-Chlor-3′,5′-di-t-butyl-, 5-Chlor-3′-t-butyl-5′-methyl-, 3′-sec.-Butyl-5′-t-butyl-, 4′-Octoxy-, 3′,5′-Di-t-amyl-, 3′,5′-Bis-(α,α-dimethylbenzyl)-Derivat;

1.2 **2-Hydroxybenzophenone**, wie das 4-Hydroxy-, 4-Methoxy-, 4-Octoxy-, 4-Decyloxy-, 4-Dodecyloxy-, 4-Benzyloxy-, 4,2′,4′-Trihydroxy-, 2′-Hydroxy-4,4′-dimethoxy-Derivat;

1.3 **Ester von gegebenenfalls substituierten Benzoesäuren**, wie Phenylsalicylat, 4-t-Butyl-phenylsalicylat, Octylphenylsalicyalat, Dibenzoylresorcin, Bis-(4-t-butylbenzoyl)-resorcin, Benzoylresorcin, 3,5-Di-t-butyl-4-hydroxy-benzoesäure-2,4-di-t-butylphenylester, 3,5-Di-t-butyl-4-hydroxybenzoesäurehexadecylester;

1.4 **Acrylate**, wie α-Cyan-β,β-diphenylacrylsäure-äthylester bzw. -iso-octylester, α-Carbomethoxy- und α-Carbomethoxy-p-methoxy-zimtsäuremethylester, α-Cyano-β-methyl-p-methoxy-zimtsäuremethylester bzw. -butylester, N-(β-Carbomethoxy-β-cyano-vinyl)-2-methylindolin;

1.5 **Nickelverbindungen**, wie Nickelkomplexe des 2,2′-Thio- bis-[4-(1,1,3,3-tetra-methyl-butyl)-phenols], wie der 1:1- oder 1:2-Komplex, gegebenenfalls mit zusätzlichen Liganden wie n-Butyl-amin, Triäthanolamin oder N-Cyclohexyl-diäthanolamin, Nickelalkyldithiocarbamate, Nickelsalze von 4-Hydroxy-3,5-di-t-butyl-benzylphosphonsäure-mono-alkylestern wie vom Methyl- oder Äthylester, Nickelkomplexe von Ketoximen wie von 2-Hydroxy-4-methyl-phenyl-undecylketonoxim, Nickelsalze der 2-Hydroxy-4-alkoxybenzophenone, Nickelkomplexe des 1-Phenyl-4-lauroyl-5-hydroxypyrazols, gegebenenfalls mit zusätzlichen Liganden;

1.6 **Sterisch gehinderte Amine**, wie

**1.6.1**. Bis-(2,2,6,6-tetramethylpiperidyl)-sebacat, -glutarat und -succinat, Bis-(1,2,2,6,6-pentamethylpiperidyl-)sebacat, -glutarat und -succinat, 4-Stearyloxy- und 4-Stearoyloxy-2,2,6,6-tetramethyl-piperidin, 4-Stearyloxy- und 4-Stearoyloxy-1,2,2,6,6-pentamethyl-piperidin, 2,2,6,6-Tetramethylpiperidylbehenat, 1,2,2,6,6- Pentamethylpiperidylbehenat, 2,2,4,4-Tetramethyl-7-oxa-3,20-diazadispiro-[5.1.11.2]-heneicosan-21-on, 2,2,3,4,4-Penta-methyl-7-oxa-3,20-diaza-dispiro-[5.1.11.2]-heneicosan-21-on, 2,2,4,4-Tetramethyl-3-acetyl-7oxa-3,20-diazadispiro-[5.1.11.2]-heneicosan-21-on, 2,2,4,4-Tetramethyl-7-oxa-3,20-diaza-20-(β-lauryloxycarbonylethyl)-21-oxo-dispiro-[5.1.11.2]-heneicosan, 2,2,3,4,4-Pentamethyl-7-oxa-3,20-diaza-20-(β-lauryloxycarbonylethyl)-21-oxo-dispiro-[5.1.11.2.]-heneicosan,2,2,4,4-Tetramethyl-3-acetyl-7-oxa-3,20-dia za-20-(β-lauryloxycarbonyläthyl)-21-oxo-dispiro-[5.1.11.2]-heneicosan, 1,2′,3,3′,5,5′-Hexahydro-2,2′,4,4′,6,6′-hexaaza-2,2′ 6,6′-bismethano-7,8-dioxo-4,4′-bis-(1,2,2,6,6- pentamethyl-4-piperidyl)-biphenyl, N,N′,N″,N‴-tetrakis-{2,4-bis-[N-(2,2,6,6-tetramethyl-4-piperidyl)-butylamino]-1,3,5-triazin-6-yl}-4,7-diazade can-1,10-diamin, N,N′,N″,N‴-tetrakis-{2,4-bis-[N-(1,2,2,6,6-pentamethyl-4-piperidyl)-butylamino]-1,3,5-triazin-6-yl}-4,7-diazadecan-1,10-diamin, N,N′,N″,N‴-tetrakis-{2,4-bis-[N-(2,2,6,6-tetramethyl-4-piperidyl)-methoxypropylamino]-1,3,5-triazin-6-yl}-4,7-diazadecan-1,
10-diamin, N,N′,N″,N‴-tetrakis-{2,4-bis-[N-(1,2,2,6,6-pentamethyl-4-piperidyl)-methoxypropylamino]-1,3,5-triazin-6-yl}-4,7-diazadecan-1,10-diamin, Bis-(1,2,2,6,6-pentamethylpiperidyl)-n-butyl-3,5-di-tert.-butyl-4-hydroxybenzylmalonat, Tris-(2,2,6,6-tetramethyl-4-piperidyl)-nitrilotriacetat, Tetrakis- (2,2,6,6-tetramethyl-4-piperidyl)-1,2,3,4-butantetracarbonsäure, 1,1′-(1,2- Ethandiyl)-bis-(3,3,5,5-tetramethyl-piperazinon).

**1.6.2**. Poly-N,N′-bis- (2,2,6,6-tetramethyl-4-piperidyl)-1,8-diazadecylen, Kondensationsprodukt aus 1-(2-Hydroxyethyl)-2,2,6, 6-tetramethyl-4-hydroxypiperidin und Bernsteinsäure, Kondensationsprodukt aus N,N′-bis-(2,2,6,6-tetramethyl-4-piperidyl)-hexamethylendiamin und 4-tert.-Octylamino-2,6-dichlor-1,3,5-s-triazin, Kondensationsprodukt aus N,N′-bis-(2,2,6,6-tetramethyl-4-piperidyl)-hexamethylendiamin und 4-Morpholino-2, 6-dichlor-1,3,5-triazin.

**1.6.3.** N-oxyalkylderivate der unter 1.6.1. und 1.6.2. genannten 2,2,6,6-tetramethyl-piperidinderivate, wobei das Alkyl $C_1$-$C_{18}$-Alkyl ist.

Besonders vortheilhaft erweist sich dabei in vielen Fällen eine Kombination der erfindungsgemäßen Verbindungen.

1.7 **Oxalsäurediamide**, wie 4,4′-Di-octyloxy-oxanilid, 2,2′-Di-octyloxy-5,5′-di-t-butyl-oxanilid, 2,2′-Didodecyloxy-5,5′-di-t-butyloxanilid, 2-Äthoxy-2′-äthyl-oxanilid, N,N′-Bis- (3-dimethylaminopropyl)-oxalamid, 2-Äthoxy-5-t-butyl-2′-äthyloxanilid und dessen Gemisch mit 2-Äthoxy-2′-äthyl-5,4-di-t-butyloxanilid, Gemische von o- und p-Methoxy- und -Äthoxy-di-substituierten Oxaniliden;

2. **Metalldesaktivatoren**, wie N,N′-Diphenyloxalsäurediamid, N-Salicylyl-N′-salicyloyl-hydrazin, N,N′-Bis-salicyloyl-hydrazin, N,N′-Bis-(3,5-di-t-butyl-4-hydroxyphenylpropionyl)-hydrazin, 3-Salicyloyl-amino-1,2,3-triazol, Bis-benzyliden-oxalsäuredihydrazid;

3. **Phosphite und Phosphonite**, beispielsweise Triphenylphosphit, Diphenylalkylphosphite, Phenyldialkylphosphite, Trisnonylphenylphosphit, Trilaurylphosphit, Trioctadecylphosphit, Distearylpentaerythrityl-diphosphit, Tris(2,4-di-t-butylphenyl) phosphit, Diisodecyl-pentaerythrityl-diphosphit, Bis-(2,4-di-t-butylphenyl)-pentaerythrityl-diphosphit, Tristearyl-sorbityltriphosphit, Tetrakis-(2,4-di-t-butylphenyl)-4,4′-biphenylen-diphosphonit, 3,9-Bis-(2,4-di-t-butyl-phenoxy)-2,4,8,10-tetraoxa-3,9-diphosphaspiro(5.5)-undecan, Tris(2-t-butyl-4-thio(2′-methenyl-4′-hydroxy-5′-t-butyl)-phenyl-5-methenyl)-phenylphosphit.

4. **Peroxidzerstörende Verbindungen**, wie Ester der β-Thio-dipropionsäure, beispielsweise der Lauryl-,

Stearyl-, Myristyl- oder Tridecylester, Mercaptobenzimidazol, das Zinksalz des 2-Mercaptobenzimidazols, Zink-alkyldithiocarbamate, Dioctadecyldisulfid, Dioctadecylmonosulfid, Pentaerythrittetrakis-(β-dodecylmercapto)-propionat;

5. **Basische Co-Stabilisatoren**, wie Melamin, Polyvinylpyrrolidon, Dicyandiamid, Triallylcyanurat, Harnstoff-Derivate, Hydrazin-Derivate, Amine, Polyamine, Polyurethane, Alkali- und Erdalkalisalze höherer Fettsäuren oder Phenolate, beispielsweise Ca-, Zn- und Mg-Stearat, Na-Ricinoleat, K-Palmitat, Antimon- oder Zinnbrenzcatechinat, Hydroxide und Oxide von Erdalkalimetallen oder des Aluminiums, beispielsweise CaO, MgO, ZnO;

6. **Nukleierungsmittel,** wie 4-t-Butylbenzoesäure, Adipinsäure, Diphenylessigsäure, Dibenzylidensorbit;

7. **Füllstoffe und Verstärkungsmittel**, wie Calciumcarbonat, Silikate, Glasfasern, Asbest, Talk, Kaolin, Glimmer, Bariumsulfat, Metalloxide und -hydroxide, Ruß, Graphit;

8. **Sonstige Zusätze,** wie Weichmacher, Gleitmittel, Emulgatoren, Pigmente, optische Aufheller, Flammschutzmittel, Antistatika, Treibmittel.

Die verschiedenen zusätzlichen Additive der vorgenannten Gruppen 1 bis 6 werden den zu stabilisierenden Polymeren in einer Menge von 0,01 bis 10, vorzugsweise 0,02 bis 5 Gew.-%, bezogen auf das Gesamtgewicht der Formmasse, zugesetzt. Der Mengenanteil der Additive der Gruppen 7 und 8 beträgt im allgemeinen 1 bis 80, vorzugsweise 10 bis 50 Gew.-%, bezogen auf die gesamte Formmasse.

Die erfindungsgemäß stabilisierten organischen Polymeren können in verschiedener Form angewendet werden, z.B. als Folien, Fasern, Bändchen, Profile oder als Bindemittel für Lacke, Klebstoffe oder Kitte.

In den folgenden Beispielen 1 bis 14 wurden zum Kristallisieren der erfindungsgemäß erhaltenen Verbindungen bestimmte Gemische von Lösungsmitteln verwendet. Die Angaben beziehen sich auf Volumenverhältnisse. Durch Verändern der Mischungsverhältnisse können gegebenenfalls noch Optimierungen erzielt werden.

I. Beispiele für die Herstellung der 6-Aryl-6H-dibenzo-[c,e][1,2]-oxaphasphorine

Allgemeine Vorschrift für Verbindungen der Formel I

Unter Stickstoffatmosphäre und Feuchtigskeitsausschluß wurde aus 300 mmol Organobromverbindung und 300 mmol (= 7,3 g) Magnesiumspänen in 180 ml Tetrahydrofuran die entsprechende Grignard-Verbindung hergestellt. Anschließend wurde die erhaltene Lösung bzw. Suspension der metallorganischen Verbindung innerhalb von 30 bis 40 Minuten unter lebhaftem Rühren bei einer Innentemperatur von -20 bis -10°C zu der Lösung von 300 mmol (= 70,4 g) 6-Chlor-6H-dibenzo-[c,e][1,2]-oxaphosphorin in 120 ml Tetrahydrofuran/n-Hexan (1:1) zudosiert. Dann ließ man die Reaktionsmischung auf Raumtemperatur erwärmen und rührte zur Vervollständigung der Umsetzung noch 2,5 Stunden. Nach Filtration vom ausgefallenen Magnesiumsalz, das mit ca. 50 ml Petroläther nachgewaschen wurde, wurde das Lösungsmittel zunächst im Vakuum der Wasserstrahlpumpe und dann im Hochvakuum abdestilliert. Der erhaltene farblose oder beige Rückstand wurde pulverisiert und im Hochvakuum getrocknet. Der Produktgehalt der Rohmaterialien wurde durch $^{31}P$-NMR-Spektroskopie ermittelt und lag im allgemeinen zwischen 78 und 98 % (vom Gesamt-P).

In den angegebenen Fällen wurde zur Charakterisierung des Produktes aus Acetonitril bzw. Aceton kristallisiert.

1. 6-Phenyl-6H-dibenzo- [c,e][1,2]-oxaphosphorin:

Ausgehend von 47,1 g Brombenzol erhielt man 84,8 g farbloses Harz mit einem Gehalt von 89,5 % an vorstehender Verbindung. Kristallisieren aus Acetonitril lieferte farblose Kristalle vom Erweichungspunkt ca. 190°C;

[$^{31}P$-NMR: $\delta_{CDCl_3}$ = 84,1 ppm].

| | | |
|---|---|---|
| $C_{18}H_{13}OP$ | Ber.: | 78,25 % C, 4,74 % H, 11,21 % P |
| (276,27) | Gef.: | 78,0 % C, 4,5 % H, 10,9 % P. |

2. 6-(2'-Tolyl)-6H-dibenzo-[c,e][1,2]-oxaphosphorin:

Ausgehend von 51,3 g o-Bromtoluol erhielt man ca. 83 g farbloses Harz mit einem Gehalt von 93,7 % an vorstehender Verbindung. Kristallisieren aus Acetonitril lieferte farblose Kristalle vom Schmp. 100 - 102°C.

[$^{31}P$-NMR: $\delta_{CDCl_3}$ = 81,8 ppm].

| | | | | |
|---|---|---|---|---|
| $C_{19}H_{15}OP$ | Ber.: | 78,61 % C, | 5,20 % H, | 10,66 % P |
| (290,29) | Gef.: | 78,3 % C, | 5,0 % H, | 10,3 % P. |

3. 6-(3'-Tolyl)-6H-dibenzo-[c,e][1,2]-oxaphosphorin:
Ausgehend von 51,3 g m-Bromtoluol erhielt man ca. 86 g gelbliches Harz mit einem Gehalt von 92 % an vorstehender Verbindung. Kristallisieren aus Acetonitril lieferte farblose Kristalle vom Schmp. 70 - 75°C. [$^{31}$P-NMR: $\delta_{CDCl_3}$ = 84,5 ppm].

| | | | | |
|---|---|---|---|---|
| $C_{19}H_{15}OP$ | Ber.: | 78,61 % C, | 5,20 % H, | 10,66 % P |
| (290,29) | Gef.: | 78,9 % C, | 5,5 % H, | 10,4 % P. |

4. 6-(4'-Tolyl)-6H-dibenzo-[c,e][1,2]-oxaphosphorin:
Ausgehend von 51,3 g p-Bromtoluol erhielt man ca. 83 g beiges Harz mit einem Gehalt von 94,4 % an obiger Verbindung. Digerieren mit Acetonitril lieferte farbloses Pulver vom Erweichungspunkt ca. 60°C. [$^{31}$P-NMR: $\delta_{CDCl_3}$ = 83,6 ppm].

| | | | | |
|---|---|---|---|---|
| $C_{19}H_{15}OP$ | Ber.: | 78,61 % C, | 5,20 % H, | 10,66 % P |
| (290,29) | Gef.: | 78,0 % C, | 5,2 % H, | 10,3 % P. |

5. 6-(4'-Tert.-butyl-phenyl)-6H-dibenzo-[c,e][1,2]-oxaphosphorin:
Ausgehend von 63,93 g 4-Brom-tert.-butylbenzol erhielt man ca. 100 g eines gelblichen, zähen Harzes mit einem Gehalt von 92 % an vorstehender Verbindung. Kristallisieren aus Aceton lieferte farblose Kristalle vom Schmp. 90 - 92°C.
[$^{31}$P-NMR, $\delta_{CDCl_3}$ = 83,2 ppm].

| | | | | |
|---|---|---|---|---|
| $C_{22}H_{21}OP$ | Ber.: | 79,49 % C, | 6,36 % H, | 9,31 % P |
| (332,38) | Gef.: | 79,1 % C, | 6,6 % H, | 9,5 % P. |

6. 6-(4'-Methoxy-phenyl)-6H-dibenzo-[c,e][1,2]-oxaphosphorin:
Ausgehend von 56,2 g 4-Bromanisol erhielt man ca. 93 g farbloses Harz mit einem Gehalt von 78 % an vorstehender Verbindung. Kristallisieren aus Aceton lieferte Kristalle vom Schmp. 104 - 106°C.
[$^{31}$P-NMR: $\delta_{DMSO}$ = 81,0 ppm]

| | | | | |
|---|---|---|---|---|
| $C_{19}H_{15}O_2P$ | Ber.: | 74,50 % C, | 4,93 % H, | 10,11 % P |
| (306,29) | Gef.: | 74,1 % C, | 4,7 % H, | 9,7 % P. |

7. 6-(2',4',6'-Trimethyl-phenyl)-6H-dibenzo-[c,e][1,2]-oxaphosphorin:
Ausgehend von 59,73 g Brommesitylen erhielt man ca. 98 g gelbes Pulver mit einem Gehalt von 84 % an vorstehender Verbindung und einem Erweichungspunkt von ca. 70°C.
[$^{31}$P-NMR: $\delta_{CDCl_3}$ = 109,9 ppm].

$C_{21}H_{19}OP$ (318,36)

8. 6-(2',3',5'-Trimethyl-phenyl)-6H-dibenzo-[c,e][1,2]-oxaphosphorin:
Ausgehend von 59,73 g 5-Brom-1,2,4-trimethylbenzol erhielt man ca. 93 g gelbes Pulver vom Erweichungspunkt ca. 70°C und einem Gehalt von 98,3 % an obiger Verbindung.
[$^{31}$P-NMR: $\delta_{CDCl_3}$ = 81,7 ppm].

$C_{21}H_{19}OP$ (318,36)

9. 6-(1'-Naphthyl)-6H-dibenzo-[c,e][1,2]-oxaphosphorin:

Ausgehend von 62,2 g 1-Bromnaphthalin wurden ca. 90 g beiges Pulver vom Erweichungspunkt ca. 80°C und einem Gehalt von 82,8 % an vorstehender Verbindung erhalten.
[$^{31}$P-NMR: $\delta_{CDCl_3}$ = 82,0 ppm].
$C_{22}H_{15}OP$ (326,33)
10. 6-(4'-Methyl-1'-naphthyl)-6H-dibenzo-[c,e][1,2]-oxaphosphorin:
Ausgehend von 66,32 g 1-Brom-4-methylnaphthalin wurden ca. 95 g farbloses Harz mit einem Gehalt von 90 % an vorstehender Verbindung erhalten. Kristallisieren aus Aceton lieferte farblose Kristalle vom Schmp. 125 - 127°C.
[$^{31}$P-NMR: $\delta_{CDCl_3}$ = 81,7 ppm]

| | | | | |
|---|---|---|---|---|
| $C_{23}H_{17}OP$ | Ber.: | 81,16 % C, | 5,03 % H, | 9,09 % P |
| (340,37) | Gef.: | 80,7 % C, | 4,7 % H, | 8,8 % P. |

11. 6-(2',6'-Dimethyl-1'-phenyl)-6H-dibenzo-[c,e][1,2]-oxaphosphorin:
Ausgehend von 55,5 g 1-Brom-2,6-dimethylbenzol wurden ca. 90 g farbloser Feststoff mit einem Gehalt von 82 % an vorstehender Verbindung erhalten. Kristallisieren aus Acetonitril lieferte farblose Kristalle vom Schmp. 93 - 96°C.
[$^{31}$P-NMR: $\delta_{CDCl_3}$ = 109,6 ppm].

| | | | | |
|---|---|---|---|---|
| $C_{20}H_{17}OP$ | Ber.: | 78,93 % C, | 5,63 % H, | 10,17 % P |
| (304,32) | Gef.: | 80,3 % C, | 5,9 % H, | 9,6 % P. |

12. 6-(2',5'-Dimethyl-1'-phenyl)-6H-dibenzo-[c,e][1,2]-oxaphosphorin:
Ausgehend von 55,5 g 1-Brom-2,5-dimethylbenzol wurden ca. 88 g farbloses Harz mit einm Gehalt von 97 % an vorstehender Verbindung erhalten. Kristallisieren aus Acetonitril lieferte farblose Kristalle vom Schmp. 70 - 73°C
[$^{31}$P-NMR: $\delta_{CDCl_3}$ = 82,9 ppm].

| | | | | |
|---|---|---|---|---|
| $C_{20}H_{17}OP$ | Ber.: | 78,93 % C, | 5,63 % H, | 10,17 % P |
| (304,32) | Gef.: | 78,3 % C, | 5,3 % H, | 9,7 % P. |

13. 4,4'-Biphenylen-bis-{6H-dibenzo-[c,e][1,2]- oxaphosphorin}:
Abweichend von der allgemeinen Vorschrift wurden 200 mmol (= 62,4 g) 4,4'-Dibrombiphenyl mit 500 mmol (=12,15 g) Magnesiumspänen in 400 ml Tetrahydrofuran unter Einwirkung von Ultraschall (40 kHz) grignardiert und anschließend mit 400 mmol (= 93,9 g) 6-Chlor-6H-dibenzo-[c,e][1,2]-oxaphosphorin in 120 ml Tetrahydrofuran/n-Hexan 1:1 umgesetzt. Man erhielt ca. 105 g farblosen Feststoff vom Erweichungspunkt 68 - 70°C mit einem Gehalt von 73 % an vorstehender Verbindung.
[$^{31}$P-NMR, $\delta_{CDCl_3}$ = 83,4 ppm].
$C_{36}H_{24}O_2P_2$ (550,52)
14. 6-(1'-Naphthyl)-6H-dibenzo[c,e] [1,2]loxaphosphorin
Unter Stickstoffatmosphäre und Feuchtigkeitsausschluß wurde aus 41,4 g 1-Bromnaphthalin und 4,9 g Magnesiumspänen in 150 ml Tetrahydrofuran die entsprechende Grignard-Verbindung hergestellt. Anschließend tropfte man zu der erhaltenen Suspension innerhalb von 30 bis 40 Minuten unter lebhaftem Rühren bei einer Innentemperatur von -20°C eine Lösung von 46,9 g 6-Chlor-6H-dibenzo-[c,e][1,2]oxaphosphorin in 100 ml Tetrahydrofuran zu. Dann ließ man die Reaktionsmischung auf Raumtemperatur erwärmen und rührte noch 2,5 Stunden. Nach Zugabe von 150 ml n-Haptan filtrierte man vom ausgefallenen Magnesiumsalz ab, das mit 250 ml n-Heptan/Tetrahydrofuran im Verhältnis 4:1 nachgewaschen wurde. Das Lösungsmittel wurde dann im Vakuum abdestilliert. Der Rückstand wurde pulverisiert und im Hochvakuum getrocknet. Man erhielt ca. 65 g blaßbeiges Pulver vom Erweichungspunkt ca. 80°C und einem Gehalt von 82,5 % ($^{31}$P-NMR) an vorstehender Verbindung.
$C_{22}H_{15}OP$ (326,33).

II. Beispiele für die Verwendung

Für die Versuche wurden die nachstehend aufgelisteten erfindungsgemäßen Oxaphosphorine eingesetzt.
14: 6-(2′,4′,6′-Trimethyl-phenyl)-6H-dibenzo-[c,e][1,2]-oxaphosphorin gemäß Beispiel 7, Gehalt laut $^{31}P$-NMR ca. 84 %.
15 und 20: 6-(4′-Methoxy-phenyl)-6H-dibenzo-[c,e][1,2]-oxaphosphorin gemäß Beispiel 6
16 und 21: 6-(2′-Tolyl)-6H-dibenzo-[c,e][1,2]-oxaphosphorin gemäß Beispiel 2
17: 6-(3′-Tolyl)-6H-dibenzo-[c,e][1,2]-oxaphosphorin gemäß Beispiel 3
18 und 22: 6-(4′-Tert.-butyl-phenyl)-6H-dibenzo-[c,e][1,2]-oxaphosphorin gemäß Beispiel 5
19: 6-(4′-Methyl-1-naphthyl)-6H-dibenzo-[c,e][1,2]-oxaphosphorin gemäß Beispiel 10

Beispiel 14 bis 19 und Vergleichsbeispiele A bis C

100,0 g unstabilisiertes Polypropylenpulver (Dichte: 0,903 g/cm³; Schmelzindex MFI 230/5: 4 g/10 min) wurden mit 0,1 g Ca-Stearat als Säureakzeptor sowie den in den Tabellen angegebenen Mengen Phosphorverbindung vermischt und mittels eines Laborextruders (Kurzkompressionsschnecke, Schneckendurchmesser 20 mm; Länge 400 mm, Düse 30 mm lang, 2 mm Durchmesser; Drehzahl: 125 Upm; Temperaturprogramm: 200/230/230°C) mehrfach extrudiert. Nach dem 1. und 10.

Durchgang wurden Proben aus dem Granulat entnommen und an diesen Proben der Schmelzindex nach DIN 53 735 sowie die Vergilbung als Yellowness Index nach ASTM D 1925-70 gemessen.

Die Ergebnisse sind in den Tabellen 1 und 2 aufgelistet.

Beispiel 20 bis 22 und Vergleichsbeispiele D bis F

100,0 g unstabilisiertes Polypropylenpulver (Dichte: 0,903 g/cm³; Schmelzindex MFI 230/5: 4g/10 min) wurden mit 0,1 g Ca-Stearat als Säureakzeptor und 0,05 g Äthylenglykol-bis-(3,3-bis-(3′-t-butyl-4′-hydroxyphenyl)-butyrat sowie den in den Tabellen angegebenen Mengen der Phosphorverbindung vermischt und mittels eines Laborextruders (Kurzkompressionsschnecke, Schneckendurchmesser 20 mm; Länge 400 mm; Düse 30 mm lang; 2 mm Durchmesser, Drehzahl: 125 Upm; Temperaturprogramm; 200/230/230 °C) mehrfach extrudiert. Nach dem 1. und 10. Durchgang wurden Proben aus dem Granulat entnommen und an diesen Proben der Schmelzindex nach DIN 53 735 sowie die Vergilbung als Yellowness Index nach ASTM D 1925-70 gemessen.

Die Ergebnisse sind in den Tabellen 3 und 4 aufgelistet.

Tabelle 1: Wirkung von Phosphorverbindungen auf die Verarbeitungsstabilität von Polypropylen. Schmelzindex MFI 230/5 nach mehrfacher Granulierung. (MFI in g/10 min)

| Beispiel | Phosphorverbindung | | MFI nach 1. | MFI nach 10. Granulierung |
|---|---|---|---|---|
| Vgl. A | keine | | 10 | 22,2 |
| Vgl. B | 0,1 g | Tris-(2,4-di-t-butyl-phenyl)-phosphit | 6,4 | 10,5 |
| Vgl. C | 0,1 g | Tetrakis-(2,4-di-t-butylphenyl)-4,4'-biphenylendiphosphonit | 5,5 | 7,8 |
| 14 | 0,1 g | (erfindungsgemäßes Oxaphosphorin) | 2,1 | 7,4 |
| 15 | | " | 2,4 | 6,6 |
| 16 | | " | 2,1 | 5,8 |
| 17 | | " | 2,2 | 6,8 |
| 18 | | " | 2,2 | 6,5 |
| 19 | | " | 1,7 | 6,5 |

Tabelle 2: Farbverlauf (Yellowness Index nach ASTM D 1925-70) bei mehrfacher Granulierung von Polypropylen.

| Beispiel | Phosphorverbindung | | YI nach | |
|---|---|---|---|---|
| | | | 1. | 10. Granulierung |
| Vgl. A | keine | | 18,7 | 27,7 |
| Vgl. B | 0,1 g | Tris-(2,4-di-t-butyl-phenyl)-phosphit | 9,0 | 15,0 |
| Vgl. C | 0,1 g | Tetrakis-(2,4-di-butylphenyl)-4,4'-biphenylphosphonit | 13,0 | 21,0 |
| 14 | 0,1 g | (erfindungsgemäßes Oxaphosphorin) | 7,0 | 21,0 |
| 15 | | " | 5,1 | 16,6 |
| 16 | | " | 4,6 | 14,6 |
| 17 | | " | 5,1 | 17,4 |
| 18 | | " | 5,7 | 15,7 |
| 19 | | " | 5,1 | 15,7 |

Tabelle 3: Wirkung von Phosphorverbindungen auf die Verarbeitungsstabilität von Polypropylen. Schmelzindex MFI 230/5 nach mehrfacher Granulierung. (MFI in g/10 min)

| Beispiel | Phosphorverbindung | | MFI nach der | |
|---|---|---|---|---|
| | | | 1. | 10. Granulierung |
| Vgl. D | keine | | 6,3 | 14,9 |
| Vgl. E | 0,05 g | Tris-(2,4-di-t-butyl-phenyl)-phosphit | 7,0 | 8,9 |
| Vgl. F | 0,05 g | Tetrakis-(2,4-di-t-butylphenyl)-4,4'-biphenylendiphosphonit | 5,9 | 8,9 |
| 21 | 0,05 g | (erfindungsgemäßes Oxaphosphorin) | 7,2 | 8,5 |
| 22 | | " | 6,5 | 10,8 |

**Tabelle 4:** Farbverlauf (Yellowness Index nach ASTM D 1925-70) bei mehrfacher Granulierung von Polypropylen.

| Beispiel | Phosphorverbindung | | YI nach 1. | 10. Granulierung |
|---|---|---|---|---|
| Vgl. D | keine | | 13,7 | 35,5 |
| Vgl. E | 0,05 g | Tris-(2,4-di-t-butyl-phenyl)-phosphit | 9,0 | 21,0 |
| Vgl. F | 0,05 g | Tetrakis-(2,4-di-t-butylphenyl)-4,4'-biphenylendiphosphonit | 13,0 | 21,0 |
| 20 | 0,05 g | (erfindungsgemäßes Oxaphosphorin) | 8,6 | 15,0 |
| 21 | | " | 7,7 | 15,0 |
| 22 | | " | 7,3 | 9,6 |

## Patentansprüche

1. Verfahren zur Herstellung von Dibenzo-[c,e][1,2]. oxaphosphorinen der Formel I

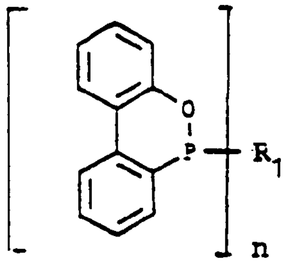

(I)

mit n = 1 oder 2, worin $R^1$ als einwertiger Rest einen Phenylrest, der 1 bis 3 Substituenten tragen kann oder einen Naphthylrest, der 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen und als zweiwertiger Rest einen Phenylen- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt, dadurch gekennzeichnet, daß man in einer ersten Stufe ein Kohlenwasserstoffhalogenid $R^1$-$(Hal)_n$, worin $R^1$ die obengenannte Bedeutung hat, n = 1 oder 2 ist und das Halogen ein Atomgewicht von mindestens 35 hat, unter Grignard-Bedingungen mit einer mindestens stöchiometrischen Menge an Magnesium zu den entsprechenden Grignard-Verbindungen $R^1(MgHal)_n$ umsetzt und diese in einer zweiten Stufe mit 6-Chlor-6H-dibenzo-[c,e][1,2]-oxaphosphorin unter Bildung der Verbindungen der Formel I umsetzt.

2. Verfahren nach Anspruch 1, dadurch gekennzeichnet, daß das Halogen in dem Kohlenwasserstoffhalogenid Chlor oder Brom ist.

3. Verfahren nach Anspruch 1 oder 2, dadurch gekennzeichnet, daß die erste Stufe in einem aprotischen, organischen Lösungsmittel durchgeführt wird.

4. Verfahren nach Anspruch 3, dadurch gekennzeichnet, daß das Lösungsmittel ein Äther ist.

5. Verfahren nach einem oder mehreren der Ansprüche 1 bis 4, dadurch gekennzeichnet, daß die Reaktion unter Einwirkung von Ultraschall durchgeführt wird.

6. Dibenzo-[c,e][1,2]-oxaphosphorine der Formel I

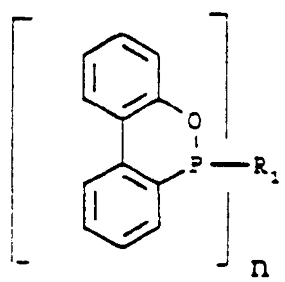

(I)

mit n = 1 oder 2, worin $R^1$ als einwertiger Rest einen Phenylrest, der 1 bis 3 Substituenten tragen kann oder einen Naphthylrest, der 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen und als zweiwertiger Rest einen

Phenylen- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt.

**7.** Verwendung von Verbindungen der Formel I, wie in Anspruch 6 definiert, für sich oder in Kombination mit einem phenolischen Antioxydans zur Stabilisierung von Kunststoffen, insbesondere Polymerisationskunststoffen.

**8.** Kunststoff-Formmasse, enthaltend einen thermoplastischen oder duroplastischen Kunststoff und ein Dibenzo-[c,e][1,2]-oxaphosphorin der Formel I

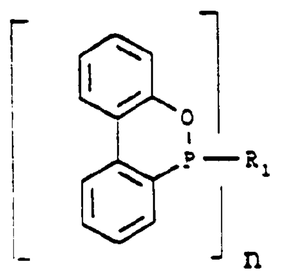

(I)

im Verhältnis von (90 bis 99,99) : (0,01 bis 10), mit n = 1 oder 2, worin $R^1$ als einwertiger Rest einen Phenylrest, der 1 bis 3 Substituenten tragen kann oder einen Naphthylrest, der 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen und als zweiwertiger Rest einen Phenylen- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt.

**9.** Kunststoff-Formmasse nach Anspruch 8, dadurch gekennzeichnet, daß der Kunststoff ein Polyolefin, vorzugsweise Polypropylen ist.

**10.** Kunststoff-Formmasse nach Anspruch 8 oder 9, dadurch gekennzeichnet, daß sie
a) den thermoplastischen oder duroplastischen Kunststoff,
b) das genannte Phosphonit und
c) einen Ester von $c_{1)}$ der 3,3-Bis-(3′-t-butyl-4′-hydroxyphenyl)-butansäure der Formel II

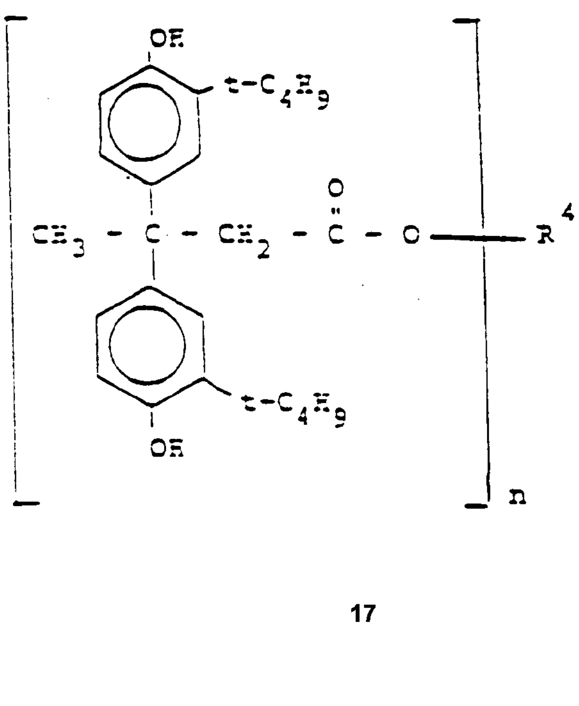

(II)

worin n 1 oder 2 ist und $R^4$ einen $C_1$ bis $C_{18}$-Alkylrest bedeutet, wenn n 1 ist, oder einen $C_1$ bis $C_{12}$-Alkylenrest bedeutet, wenn n 2 ist, oder $c_{2)}$ der β-(3,5-di-t-butyl-4-hydroxy-phenyl)-propionsäure der Formel III

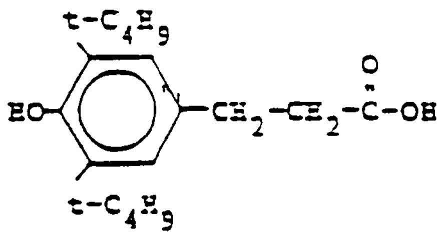

(III)

mit einem ein- bis vierwertigen Alkohol im Verhältnis a:b:c von (90 bis 99,98) : (0,01 bis 5) : (0,01 bis 5) Gew.-%, vorzugsweise von (98 bis 99,95) : (0,025 bis 1) (0,025 bis 1) enthält.

11. Kunststoff-Formmasse nach einem oder mehreren der Ansprüche 8 bis 10, dadurch gekennzeichnet, daß sie zusätzlich Antioxidantien, UV-Absorber, Lichtschutzmittel, Metalldesaktivatoren, Peroxidzerstörende Verbindungen, basische Costabilisatoren, Nukleierungsmittel, Füllstoffe, Verstärkungsmittel, Weichmacher, Gleitmittel, Emulgatoren, Pigmente, optische Aufheller, Flammschutzmittel, Antistatika oder Treibmittel enthält.

## Claims

1. A process for the preparation of a dibenzo-[c,e][1,2]-oxaphosphorine of the formula I

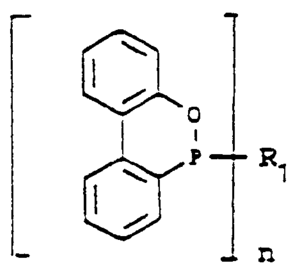

(I)

where n = 1 or 2 and in which $R^1$, as a monovalent radical, is a phenyl radical, which may carry 1 to 3 substituents, or a naphthyl radical, which may carry 1 to 5 substituents, the substituents being identical or different nonaromatic hydrocarbon, alkoxy, alkylthio or dialkylamino radicals, in each case having 1 to 8 carbon atoms, aryl or aryloxy, in each case having 6 to 10 carbon atoms, or halogen having an atomic number of from 9 to 35, or, as a divalent radical, is a phenylene or biphenylene radical which is unsubstituted or substituted by up to 4 nonaromatic hydrocarbon radicals having 1 to 8 carbon atoms, or is a naphthylene radical which is unsubstituted or carries 1 to 4 nonaromatic hydrocarbon radicals having 1 to 8 carbon atoms as substituents, which comprises, in a first step, reacting a hydrocarbon halide $R^1$-$(Hal)_n$ in which $R^1$ is as defined above, n = 1 or 2, and the halogen has an atomic weight of at least 35, under Grignard conditions with an at least stoichiometric amount of magnesium to give the corresponding Grignard compound $R^1(MgHal)_n$, and reacting the latter, in a second step, with 6-chloro-6H-dibenzo[c,e][1,2]oxaphosphorine, forming a compound of the formula I.

2. The process as claimed in claim 1, wherein the halogen in the hydrocarbon halide is chlorine or bromine.

3. The process as claimed in claim 1 or 2, wherein the first step is carried out in an aprotic, organic solvent.

4. The process as claimed in claim 3, wherein the solvent is an ether.

5. The process as claimed in one or more of claims 1 to 4, wherein the reaction is carried out using ultrasound.

6. A dibenzo[c,e][1,2]oxaphosphorine of the formula I

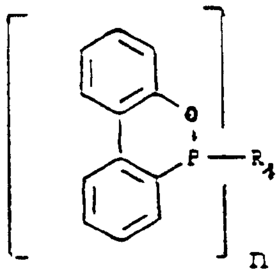

(I)

where n = 1 or 2 and in which $R^1$, as a monovalent radical, is a phenyl radical, which may carry 1 to 3 substituents, or a naphthyl radical, which may carry 1 to 5 substituents, the substituents being identical or different nonaromatic hydrocarbon, alkoxy, alkylthio or dialkylamino radicals, in each case having 1 to 8 carbon atoms, aryl or aryloxy, in each case having 6 to 10 carbon atoms, or halogen having an atomic number of from 9 to 35, or, as a divalent radical, is a phenylene or biphenylene radical which is unsubstituted or substituted by up to 4 nonaromatic hydrocarbon radicals having 1 to 8 carbon atoms, or is a naphthylene radical which is unsubstituted or carries 1 to 4 nonaromatic hydrocarbon radicals having 1 to 8 carbon atoms as substituents.

7. The use of a compound of the formula I as defined in claim 6, alone or in combination with a phenolic antioxidant, for stabilizing plastics, in particular polymerization plastics.

8. A plastics molding composition comprising a thermoplastic or thermosetting plastic and a dibenzo-[c,e][1,2]oxaphosphorine of the formula I

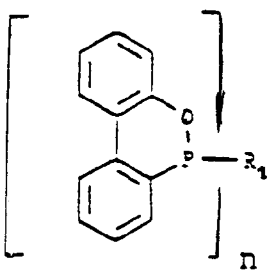

(I)

in a ratio of (from 90 to 99.99) : (from 0.01 to 10), where n = 1 or 2 and in which $R^1$, as a monovalent radical, is a phenyl radical, which may carry 1 to 3 substituents, or a naphthyl radical, which may carry 1 to 5 substituents, the substituents being identical or different nonaromatic hydrocarbon, alkoxy, alkylthio or dialkylamino radicals, in each case having 1 to 8 carbon atoms, aryl or aryloxy, in each case having 6 to 10 carbon atoms, or halogen having an atomic number of from 9 to 35, or, as a divalent radical, is a phenylene or biphenylene radical which is unsubstituted or substituted by up to 4 nonaromatic hydrocarbon radicals having 1 to 8 carbon atoms, or is a naphthylene radical which is unsubstituted or carries 1 to 4 nonaromatic hydrocarbon radicals having 1 to 8 carbon atoms as substituents.

9. A plastics molding composition as claimed in claim 8, wherein the plastic is a polyolefin, preferably polypropylene.

10. A plastics molding composition as claimed in claim 8 or 9, which comprises
   a) the thermoplastic or the thermosetting plastic,
   b) the phosphonite mentioned, and
   c) an ester of $c_{1)}$ the 3,3-bis(3′-t-butyl-4′-hydroxyphenyl)butanoic acid of the formula II

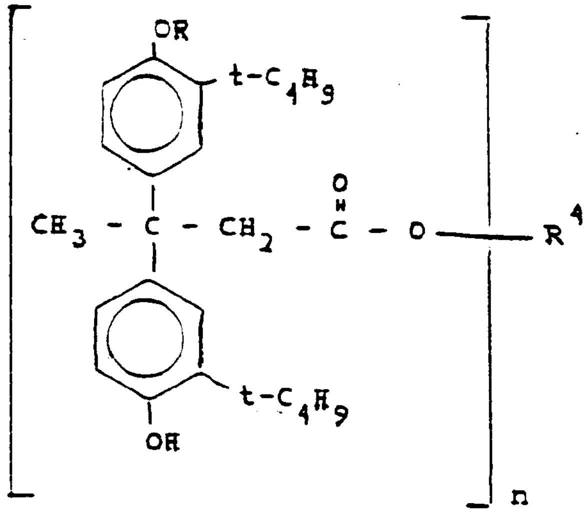

(II)

in which n is 1 or 2 and $R^4$ is a $C_1$ to $C_{18}$ alkyl radical if n is 1 or is a $C_1$ to $C_{12}$ alkylene radical if n is 2, or $C_{2)}$ β-(3,5-di-t-butyl-4-hydroxyphenyl)propionic acid of the formula III

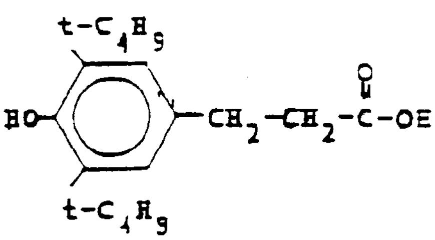

(III)

with a mono- to tetrahydric alcohol in a ratio a:b:c of (from 90 to 99.98) : (from 0.01 to 5) : (from 0.01 to 5) % by weight, preferably of (from 98 to 99.95) : (from 0.025 to 1) : (from 0.025 to 1).

**11.** A plastics molding composition as claimed in one or more of claims 8 to 10, which additionally comprises an antioxidant, UV absorber, light stabilizer, metal deactivator, peroxide-destroying compound, basic co-stabilizer, nucleating agent, filler, reinforcing agent, plasticizer, lubricant, emulsifier, pigment, optical brightener, flameproofing agent, antistatic or blowing agent.

## Revendications

**1.** Procédé pour préparer des dibenzo-[c,e][1,2]-oxaphosphorines de formule I

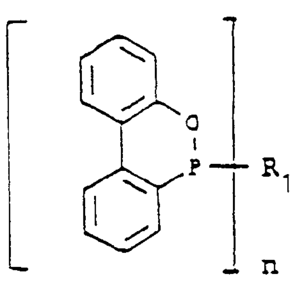

(I)

avec n = 1 ou 2, dans lesquelles $R^1$, comme radical monovalent, représente un radical phényle, qui peut porter de 1 à 3 substituants, ou un radical naphtyle, qui peut porter de 1 à 5 substituants, les substituants pouvant être identiques ou différents et représentant un radical hydrocarboné non aromatique, un radical alcoxy, un radical alkylthio, ou un radical dialkylamino avec chaque fois de 1 à 8 atomes de carbone, un aryle ou un aryloxy ayant chaque fois de 6 à 10 atomes de carbone ou un halogène ayant un nombre

atomique de 9 à 35, et comme radical divalent il représente un radical phénylène ou biphénylène, qui est non substitué ou substitué par jusqu'à 4 radicaux hydrocarbonés non aromatiques ayant de 1 à 8 atomes de carbone, ou un radical naphtylène qui est non substitué ou porte comme substituants de 1 à 4 radicaux hydrocarbonés non aromatiques ayant de 1 à 8 atomes de carbone, caractérisé en ce que l'on fait réagir dans une première étape un halogénure hydrocarboné $R^1$-$(Hal)_n$, où $R^1$ a la signification précitée, n = 1 ou 2, et dont l'halogène a un poids atomique d'au moins 35, dans les conditions de Grignard, avec une quantité au moins stoechiométrique de magnésium pour obtenir les composés correspondants de Grignard $R^1(MgHal)_n$, et en ce que l'on fait réagir ceux-ci, dans une deuxième étape, avec la 6-chloro-6H-dibenzo-[c,e][1,2]-oxaphosphorine en formant les composés de formule I.

2. Procédé selon la revendication 1, caractérisé en ce que l'halogène dans l'hydrocarbure halogéné est le chlore ou le brome.

3. Procédé selon la revendication 1 ou 2, caractérisé en ce que la première étape est réalisée dans un solvant organique aprotique.

4. Procédé selon la revendication 3, caractérisé en ce que le solvant est un éther.

5. Procédé selon une ou plusieurs des revendications 1 à 4, caractérisé en ce que la réaction est réalisée sous l'action des ultra-sons.

6. Dibenzo-[c,e][1,2]-oxaphosphorines de formule I

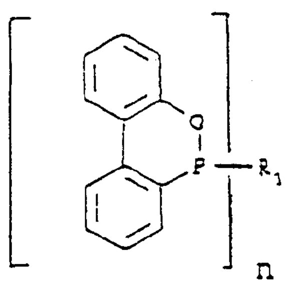

(I)

avec n = 1 ou 2, dans lesquelles $R^1$, comme radical monovalent, représente un radical phényle, qui peut porter de 1 à 3 substituants, ou un radical naphtyle, qui peut porter de 1 à 5 substituants, les substituants pouvant être identiques ou différents et représentant un radical hydrocarboné non aromatique, un radical alcoxy, un radical alkylthio, ou un radical dialkylamino avec chaque fois de 1 à 8 atomes de carbone, un aryle ou un aryloxy ayant chaque fois de 6 à 10 atomes de carbone ou un halogène ayant un nombre atomique de 9 à 35, et comme radical divalent il représente un radical phénylène ou biphénylène, qui est non substitué ou substitué par jusqu'à 4 radicaux hydrocarbonés non aromatiques ayant de 1 à 8 atomes de carbone, ou un radical naphtylène qui est non substitué ou porte comme substituants de 1 à 4 radicaux hydrocarbonés non aromatiques ayant de 1 à 8 atomes de carbone.

7. Utilisation des composés de formule I, tels que définis dans la revendication 6, pour eux-mêmes ou en combinaison avec un anti-oxydant phénolique, pour stabiliser des matières plastiques, en particulier des matières plastiques de polymérisation.

8. Matière moulable en matière plastique comportant une matière plastique thermoplastique ou thermodurcissable et une dibenzo-[c,e][1,2]-oxaphosphorine de formule I

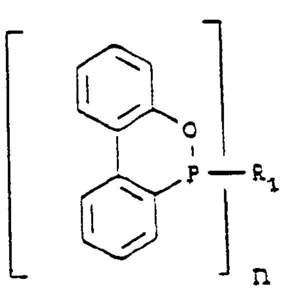

(I)

dans un rapport de (90 à 99,99): (0,01 à 10), avec n = 1 ou 2, dans laquelle $R^1$, comme radical monovalent, représente un radical phényle, qui peut porter de 1 à 3 substituants, ou un radical naphtyle, qui peut porter de 1 à 5 substituants, les substituants pouvant être identiques ou différents et représentant un radical hydrocarboné non aromatique, un radical alcoxy, un radical alkylthio, ou un radical dialkylamino avec chaque fois de 1 à 8 atomes de carbone, un aryle ou un aryloxy ayant chaque fois de 6 à 10 atomes de carbone ou un halogène ayant un nombre atomique de 9 à 35, et comme radical divalent il représente un radical phénylène ou biphénylène, qui est non substitué ou substitué par jusqu'à 4 radicaux hydrocarbonés non aromatiques ayant de 1 à 8 atomes de carbone, ou un radical naphtylène qui est non substitué ou porte comme substituants de 1 à 4 radicaux hydrocarbonés non aromatiques ayant de 1 à 8 atomes de carbone.

**9.** Matière moulable en matière plastique selon la revendication 8, caractérisée en ce que la matière plastique est une polyoléfine, de préférence le polypropylène.

**10.** Matière moulable en matière plastique selon la revendication 8 ou 9, caractérisée en ce qu'elle comporte :

a) la matière plastique thermoplastique ou thermodurcissable,
b) le phosphonite précité et
c) un ester de
$c_{1)}$ l'acide 3,3-bis-(3'-t-butyl-4'-hydroxyphényl)-butanoïque de formule II

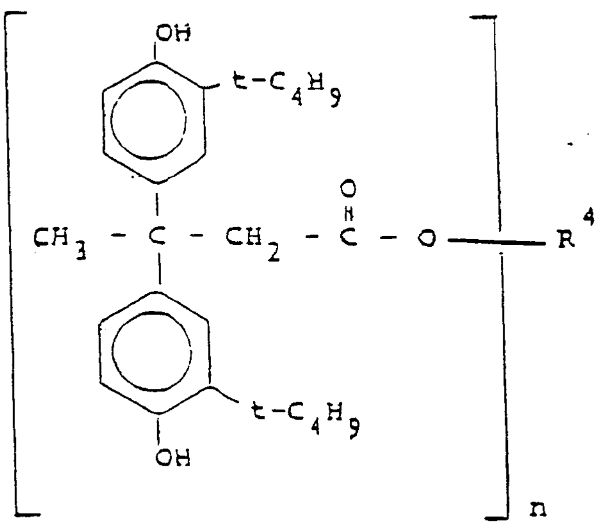

(II)

où n est 1 ou 2 et $R^4$ représente un radical alkyle en $C_1$-$C_{18}$, si n est 1, ou un radical alkylène en $C_1$-$C_{12}$, si n est 2, ou
$c_{2)}$ l'acide β-(3,5-di-t-butyl-4-hydroxy-phényl)-propionique de formule III

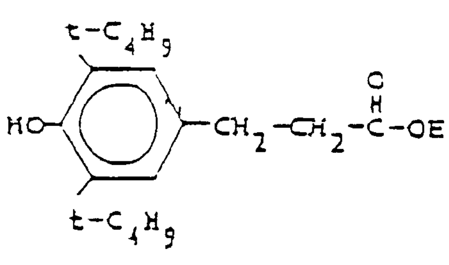

(III)

avec un alcool ayant de une à quatre fonctions alcool dans un rapport a:b:c de (90 à 99,98): (0,01 à 5): (0,01 à 5) % en poids, de préférence de (98 à 99,95): (0,025 à 1): (0,025 à 1).

**11.** Matière moulable en matière plastique selon une ou plusieurs des revendications 8 à 10, caractérisée en ce qu'elle comporte en outre des anti-oxydants, des absorbants d'UV, des agents de protection contre la lumière, des désactivateurs de métaux, des composés détruisant les peroxydes, des co-stabilisants basiques, des agents de nucléation, des charges, des agents renforçants, des plastifiants, des lubrifiants, des émulsifiants, des pigments, des azurants optiques, des agents ignifuges, des agents antistatiques ou des produits moussants.